# FASCICULE DE BREVET EUROPEEN

(11) **EP 0 772 973 B1**
(45) Date de publication et mention de la délivrance du brevet: **03.02.1999**
(21) Numéro de dépôt: 95402533.4
(22) Date de dépôt: 13.11.1995
(51) Int. Cl.: A01N 25/16, A01N 59/00

(54) **Compositions destinées au traitement des trayons des mammifères avant et après la traite**
Zusammensetzung zur Behandlung von Eutern bei Säugetieren vor und nach dem Melken
Composition for treating udders of mammals before and after milking

(43) Date de publication de la demande: 14.05.1997
(73) Titulaire: HENKEL ECOLAB, Issy les Moulineaux (Hauts de Seine) (FR)
(72) Inventeur: Collin Alain, F-94230 Cachan (FR); de Roquefeuil Hubert, F-78640 Villiers St Frederic (FR); Bechennec Laurent, F-92330 Sceaux (FR); Bardoneschi Gilbert, F-51300 Bassu (FR)
(74) Mandataire: Cabinet HERRBURGER

(56) Documents cités:
- EP-A- 0 423 922
- EP-A- 0 528 697
- FR-A- 2 633 308

## Description

La présente invention se rapporte au traitement des trayons de mammifères et notamment des trayons des vaches.

Les conséquences fâcheuses des infections des trayons des femelles laitières ou mammites sont bien connues des éleveurs et producteurs de lait. Ces infections souvent consécutives à des conditions d'hygiène insuffisantes peuvent, à la longue léser la glande mammaire de l'animal et par suite abaisser dans des proportions considérables sa production de lait, voire même le rendre inapte à celle-ci.

De plus, lorsqu'un animal est atteint de mammite, si des précautions particulières ne sont pas prises, cette infection a de grandes chances de se propager au reste de l'élevage dont la production laitière risque de ne plus satisfaire aux règles de l'hygiène publique.

Il est en particulier essentiel de réduire les risques de contamination « croisée » d'une vache à une autre par l'intermédiaire des faisceaux trayeurs : en effet, après la traite d'une vache, le faisceaux trayeurs tombent automatiquement suite à la rupture de la dépression et sont immédiatement appliqués, par l'éleveur, sur les trayons d'une autre vache sans subir de lavage préalable.

Les risques susmentionnés montrent clairement l'importance pour les producteurs laitiers, de maintenir leurs animaux dans des conditions d'hygiène qui soient aussi strictes que possibles.

Il est à noter que les normes européennes, qui sont en constante évolution, recommandent de maintenir, d'une part, le nombre de germes totaux et, d'autre part, le nombre de cellules somatiques (induites par une réaction de défense de l'organisme suite à une mammite) dans le lait destiné à la consommation au-dessous de seuils déterminés.

Pour éliminer la présence de souillures avant l'opération de traite et éviter le développement de bactéries ou germes microbiens, les éleveurs ont pris l'habitude de faire précéder la traite par une opération de nettoyage et de la faire suivre par une opération de désinfection des trayons.

Dans certains pays l'opération de nettoyage, mise en oeuvre avant la traite consiste à essuyer les trayons avec un papier ou à passer sur les trayons, notamment à l'aide d'une lavette, un produit nettoyant qui contient généralement un agent nettoyant tel que des tensioactifs anioniques du type alkyl-benzène-sulfonates ou encore des savons de potasse associés à des agents adoucissants tels que la glycérine, les esters d'acides gras ou le sorbitol ; cette opération a pour but essentiel d'éliminer toute trace de bouse ou souillures diverses provenant par exemple des litières.

Il est à noter que ce produit nettoyant peut constituer une source de contamination d'une vache à une autre.

L'opération de désinfection réalisée après la traite consiste à traiter, par trempage ou pulvérisation, le trayon de l'animal à l'aide d'un produit contenant essentiellement un agent désinfectant le cas échéant combiné à des adoucissants ou des cicatrisants.

Parmi les désinfectants couramment utilisés pour la désinfection des trayons de mammifères, on peut distinguer deux classes différentes, à savoir d'une part des complexes iodés du type iodophore dans lesquels l'iode est fixé sur des tensioactifs non ioniques, et d'autre part des produits à base de chlorhexidine ou analogue du type biguanide.

Jusqu'à ces dernières années, il était communément admis qu'il était indispensable d'utiliser pour effectuer les traitements susmentionnés, deux produits fondamentalement différents à savoir un produit de nettoyage et un produit de désinfection, ce qui était peu pratique pour les éleveurs et entraînait en outre des risques de confusion.

L'une des raisons de cette opinion était liée au fait que les désinfectants couramment utilisés ne sont pas des agents nettoyants efficaces et en outre peuvent laisser sur les trayons des mammifères des résidus pouvant se retrouver à un niveau détectable dans le lait destiné à la consom mation humaine. Or suivant leur composition, de tels résidus peuvent être source de nuisances.

Il est en particulier à noter qu'il existe une législation spécifique au domaine vétérinaire se rapportant au problème des résidus dans le lait destiné à la consommation ; celle-ci définit la notion de LMR (Limite Maximale de Résidus). Il existe une liste positive incluant des molécules dont la présence dans le lait n'oblige pas à effectuer des mesures de LMR.

Il convient cependant de souligner que certains résidus, non préjudiciables en eux-mêmes au niveau du lait, présentent l'inconvénient d'empêcher la transformation fromagère et sont, par suite, liés à un risque technologique au niveau de la transformation du lait.

En conséquence la mise en oeuvre de tels désinfectants courants dans le produit de nettoyage aurait contraint les éleveurs à prévoir un rinçage et un essuyage ultérieurs particulièrement longs et soigneux, ce qui aurait été incompatible avec les contraintes propres au matériel de traite actuellement utilisé : en effet les éleveurs doivent obligatoirement essuyer le produit de nettoyage au plus tard 30 secondes après son application, et ce de manière très rapide.

Indépendamment de ce qui précède, il est a noter que le produit de nettoyage avant la traite et le produit de désinfection après la traite doivent avoir des actions parallèles et indépendantes, sans risque d'interférences ou de réactions mutuelles de nature à détruire l'efficacité propre de leurs agents actifs : il est, par exemple impossible de mélanger des tensioactifs cationiques et des tensioactifs anioniques tels que par exemple les alkyl-benzène-sufonates qui étaient auparavant couramment utilisés dans les produits de nettoyage.

Pour remédier aux inconvénients susmentionnés et faciliter le travail des éleveurs, il a déjà été proposé, conformément au document FR-A-88 08 658 de mettre en oeuvre en tant que produit de nettoyage et que produit de désinfection une même composition à base d'oxydes d'amines dérivés d'amines tertiaires à haut poids moléculaire et de chlorure de 1-coco alkyl guanidinium, et d'utiliser cette composition à l'état pur lors de l'opération de désinfection et sous une forme diluée entre 20 et 500 fois lors de l'opération de nettoyage.

Il est à noter que dans la composition de nettoyage, l'activité de l'agent désinfectant dilué entre 20 et 500 fois est pratiquement nulle.

Conformément à cette même publication, il a également été proposé d'appliquer la composition concentrée sous forme de mous se sur le trayon à traiter lors de la désinfection après la traite ; il a en effet pu être prouvé que la mousse se maintient plus longtemps sur la peau de l'animal que le produit liquide, ce qui allonge le temps de contact et amé liore la désinfection en permettant au produit de mieux entrer en contact et détruire les germes présents sur la peau de l'animal, en particulier à l'intérieur de ses replis.

Les avantages du processus décrit dans cette publication antérieure ne sont cependant qu'apparents vu qu'avant de mettre en oeuvre l'opération de nettoyage des trayons précédant la traite, l'éleveur doit effectuer une dilution de la composition dans l'eau, ce qui est en fait pratiquement aussi peu commode que l'utilisation de deux produits différents, l'un pour le nettoyage et l'autre pour la désinfection.

Or, en l'absence d'une telle dilution, la composition pourrait laisser sur le trayon de l'animal un résidu non acceptable et présentant un risque pour la transformation laitière.

Plus récemment, on a déjà proposé, conformément au document EP-A-0 423 922 de mettre en oeuvre en tant que produit de désinfection une composition à base d'acide lactique et de peroxyde d'hydrogène qui présente l'avantage d'avoir une activité microbicide remarquable, et de ne pas risquer de laisser des résidus non acceptables après application sur les trayons des animaux ; en conséquence, cette composition désinfectante peut être appliquée sur le trayon après le la traite, mais également avant la traite, pour éviter les risques de contamination croisée d'une vache à une autre, induits par le faisceau trayeur ou par la solution de nettoyage, ce sans contraindre systématiquement les éleveurs à effectuer des rinçages et des essuyages longs et fastidieux avant l'opération de traite proprement dite.

Les auteurs de cette publication proposent toutefois d'ajouter à cette composition des adjuvants tels qu'elle ait une viscosité proche de celle de l'eau lorsqu'elle est utilisée avant la traite pour faciliter son écoulement et une viscosité plus élevée lorsqu'elle est utilisée après la traite afin de lui permettre d'être mieux retenue sur la peau de l'animal et donc de « tenir » plus longtemps sur celle-ci. Or, il est clair que la mise en oeuvre de compositions renfermant les mêmes agents actifs mais se distinguant par leur viscosité entraîne pour l'éleveur des inconvénients sensiblement équivalents à ceux auxquels il se heurte lorsqu'il utilise deux compositions totalement différentes.

L'objet de l'invention consiste justement à remédier à cet inconvénient, ce tout en améliorant l'efficacité des compositions connues aussi bien lorsqu'elles sont utilisées en tant que produit de nettoyage qu'en tant que produit de désinfection avant ou après la traite.

A cet effet, il est proposé, conformément à celle-ci, d'utiliser un mélange actif se présentant sous forme de mousse et renfermant un agent microbicide ainsi qu'au moins un agent tensioactif pour la préparation d'une composition unique destinée au domaine de l'hygiène des trayons des mammifères, en particulier des trayons des vaches lors de l'opération de traite et adaptée sans subir de traitement préalable tel qu'une dilution, d'une part, à la désinfection des trayons après la traite et, d'autre part, à leur nettoyage avant la traite, c'est-à-dire à l'élimination des différentes souillures pouvant être présentes à leur surface.

Cette utilisation permet de faciliter notablement les manipulations nécessaires de l'éleveur, étant donné qu'il lui suffit pour effectuer le nettoyage de tremper le trayon dans la composition se présentant sous forme de mousse, puis de l'essuyer avant de mettre en oeuvre l'opération de traite et de désinfecter le trayon en le trempant dans la même composition que celle ayant servi au nettoyage.

La présence de l'agent microbicide dans la composition de nettoyage permet de réduire au maximum les risques de contamination « croisée » d'une vache à une autre.

Il est à noter que la mise en oeuvre d'une composition sous forme de mousse non seulement lors de la désinfection des trayons après la traite mais également et comme on ne l'avait jamais proposé auparavant lors de leur nettoyage avant la traite est particulièrement avantageuse : on peut en effet ainsi exclure tout risque de branchement du faisceau trayeur sans essuyage du trayon compte tenu du caractère persistant et visible de la mousse et s'assurer que tous les trayons ont bien été traités.

En outre, l'application de la composition nettoyante sous forme de mousse permet de limiter, pour une même action, la quantité de matières actives devant être présente sur la peau de l'animal, donc de mieux utiliser ces matières actives et de diminuer les résidus.

Selon une autre caractéristique de l'invention, l'agent microbicide est constitué par l'association d'acide lactique et de peroxyde d'hydrogène.

Le mélange actif peut avantageusement renfermer, en proportions pondérales, entre 0,88 % et 3 % d'acide lactique, et entre 0,25 % et 3 % de peroxyde d'hydrogène.

Compte tenu de ce qui précède, l'invention propose donc d'ajouter au moins un agent tensioactif à une composition telle que décrite dans la publication susmentionnée EP-A-0 423 922 de façon à permettre de la transformer en une mousse, et de tremper les trayons dans cette mousse aussi bien lors du nettoyage précédant la traite que de la désinfection suivant celle-ci.

Il est clair que l'invention permet ainsi de simplifier dans une large mesure le travail de l'éleveur tout en augmentant l'efficacité et la fiabilité des opérations de nettoyage et de désinfection et en particulier d'augmenter la sécurité de ces opérations compte tenu du fait qu'avec la mousse on arrive à couvrir une surface de trayon plus grande : en effet, la mousse monte plus haut qu'un liquide mis dans le même récipient (gobelet de trempage) et permet d'atteindre la zone située au niveau de l'attache du trayon qui n'est normalement pas atteinte lors du trempage classique dans une solution de nettoyage liquide alors que le faisceau trayeur est en contact avec cette zone.

La composition se présentant sous forme de mousse objet de l'invention peut bien entendu être préparée indépendamment puis transférée à l'aide de tout appareil adapté à l'application sur les trayons ou encore être parallèlement obtenue et mise en oeuvre grâce à un dispositif spécifique sans pour cela sortir du cadre de l'invention.

## Revendications

1. Utilisation d'un mélange désinfectant se présentant sous forme de mousse adapté à la désinfection des trayons des mammifères, en particulier des vaches après la traite, pour la préparation d'une composition adaptée au nettoyage des trayons avant la traite, c'est-à-dire à l'élimination des différentes souillures pouvant être présentes à leur surface, le mélange désinfectant étant utilisé tel quel, sans subir de traitement préalable, tel qu'une dilution,
caractérisée en ce que
l'on trempe le trayon dans la composition se présentant sous forme de mousse puis on l'essuie avant de brancher le faisceau trayeur.

2. Utilisation selon la revendication 1,
caractérisée en ce que
la composition renferme au moins un agent tensioactif ainsi qu'un agent microbicide constitué par l'association d'acide lactique et de peroxyde d'hydrogène.

3. Utilisation selon la revendication 2,
caractérisée en ce que
la composition renferme en proportions pondérales entre 0,88 % et 3 % d'acide lactique et entre 0,25 % et 3 % de peroxyde d'hydrogène.

## Claims

1. Use of a disinfecting mixture in the form of a foam suitable for disinfecting the teats of mammals, especially cows after milking, for the preparation of a composition suitable for cleaning the teats before milking, that is to say, for eliminating the various impurities which may be present on their surface, the disinfecting mixture being used as it is, without undergoing previous treatment, such as dilution, characterised in that the teat is immersed in the composition, which is in the form of a foam, and then it is wiped before the teat cup cluster is connected.

2. Use according to claim 1, characterised in that the composition contains at least one surface-active agent and also a microbicidal agent formed by the association of lactic acid and hydrogen peroxide.

3. Use according to claim 2, characterised in that the composition contains, in proportions by weight, between 0.88% and 3% of lactic acid and between 0.25% and 3% of hydrogen peroxide.

## Patentansprüche

1. Verwendung einer in Form eines Schaumes vorliegenden, zur Desinfektion der Zitzen von Säugetieren, insbesondere von Kühen nach dem Melken, bestimmten und angepaßten desinfizierenden Mischung zur Herstellung einer zur Reinigung der Zitzen vor dem Melken geeigneten Zusammensetzung, d. h. zur Beseitigung der verschiedenen, sich möglicherweise auf ihrer Oberfläche befindenden Schmutzflecken, wobei die desinfizierende Mischung, ohne Beeinträchtigung durch eine vorhergehende Behandlung, unverändert oder wie eine Verdünnung verwendet werden kann, dadurch gekennzeichnet, daß man die Zitze in die in Form eines Schaumes vorliegende Zusammensetzung taucht und dann abtrocknet, bevor das Melkgeschirr angelegt wird.

2. Verwendung nach Anspruch 1, dadurch gekennzeichnet, daß die Zusammensetzung wenigstens einen oberflächenaktiven wie auch einen durch Verbindung von Milchsäure mit Wasserstoffperoxid gebildeten keimtötenden Wirkstoff enthält.

3. Verwendung nach Anspruch 2, dadurch gekennzeichnet, daß die Zusammensetzung in Gewichtsanteilen ausgedrückt zwischen 0,88% und 3% Milchsäure und zwischen 0,25% und 3% Wasserstoffperoxid enthält.
